Europäisches Patentamt

European Patent Office

Office européen des brevets

(19)

(11) Veröffentlichungsnummer: **0 108 896**
**B1**

(12) # EUROPÄISCHE PATENTSCHRIFT

(45) Veröffentlichungstag der Patentschrift:
07.01.88

(21) Anmeldenummer: **83109470.1**

(22) Anmeldetag: **23.09.83**

(51) Int. Cl.⁴: **G 01 G  19/03**, G 01 G  19/02,
G 01 M  1/12

(54) **Vorrichtung zur Ermittlung der Achslasten und der Schwerpunktlage von Fahrzeugen.**

(30) Priorität: **16.10.82  DE 3238469**

(43) Veröffentlichungstag der Anmeldung:
**23.05.84 Patentblatt 84/21**

(45) Bekanntmachung des Hinweises auf die Patenterteilung:
**07.01.88 Patentblatt 88/1**

(84) Benannte Vertragsstaaten:
**AT CH DE FR GB IT LI NL**

(56) Entgegenhaltungen:
**EP - A - 0 060 074
FR - A - 1 401 290
FR - A - 2 004 400
FR - A - 2 214 119
FR - A - 2 286 726
US - A - 3 374 844
US - A - 3 842 922**

**RESEARCH DISCLOSURE, Nr. 203, März 1981, Seite 110,
Nr. 20314, Havant, Hampshire, GB; "Centre of gravity
indicator for load vehicles"**

(73) Patentinhaber: **M A N Nutzfahrzeuge GmbH, Dachauer
Strasse 667 Postfach 50 06 20, D-8000 München 50 (DE)**

(72) Erfinder: **Görge, Werner, Dr. Dipl.-Ing.,
Pötschenerstrasse 21, D-8035 Gauting (DE)**

## Beschreibung

Bei der Verladung schwergewichtigen Gutes auf einem Transportfahrzeug, beispielsweise der Beförderung einer Fahrzeugeinheit (etwa eines Lastzuges) auf einem Eisenbahnwagen im Huckepackverkehr, besteht ein wesentliches Erfordernis darin, dass der Schwerpunkt des zu befördernden Gutes in den Bereich der Nutzlastschwerpunktlage, d.h. der Sollschwerpunktlage des Transportfahrzeuges fällt. Wird dies nicht beachtet, so könnten – trotz Einhaltung der zulässigen Gesamtbelastung des Transportfahrzeuges – die zulässigen Lasten einer oder mehrerer seiner Achsen überschritten werden, was zu Beschädigungen des Transportfahrzeuges bis zum Achsbruch führen kann.

Um nun dem erwähnten Erfordernis nachzukommen, müssen zunächst die einzelnen Achslasten des beladenen Transportfahrzeuges ermittelt werden, woraus sich dessen Istschwerpunktlage berechnen und mit der Sollschwerpunktlage des Transportfahrzeuges vergleichen lässt. Entsprechend dem erhaltenen Ergebnis kann dann nötigenfalls die Lage des zu befördernden Gutes auf der Plattform des Transportfahrzeuges so korrigiert werden, dass die Achslasten gleichmässig verteilt sind und der Istschwerpunkt des beladenen Fahrzeuges mit seinem Sollschwerpunkt zusammenfällt. Ein solches Vorgehen ist jedoch für die Praxis zu zeitraubend, sofern man dabei die erforderliche Sorgfalt walten lässt. Andererseits wird der Versuch einer Zeiteinsparung durch Unzuverlässigkeit der erhaltenen Ergebnisse erkauft.

Demgemäss liegt der Erfindung die Aufgabe zugrunde, eine Vorrichtung zu schaffen, welche Angaben zu den einzelnen Achslasten und der Schwerpunktlage eines Fahrzeuges exakt und rasch, d.h. innerhalb einer praktisch tragbaren Zeitspanne liefert.

Diese Aufgabe wird gelöst durch eine Vorrichtung zur Ermittlung der Achslasten und Schwerpunktlage von Fahrzeugen, welche durch die folgenden Merkmale gekennzeichnet ist:

a) ein Kartenlesegerät zum Lesen einer Kennkarte, auf welcher die zulässigen Achshöchstlasten sowie die Sollschwerpunktlage des Fahrzeugs vermerkt sind;

b) eine vom beladenen Fahrzeug zu überfahrende Messeinrichtung zum Ermitteln der Istbelastung der einzelnen Fahrzeugachsen;

c) eine Vergleichs- und Rechenstation zum Vergleich der vom Lesegerät zugeführten Informationssignale mit den von der Messeinrichtung zugeführten Istbelastungssignalen sowie zur Berechnung der Istschwerpunktlage des beladenen Fahrzeugs und deren Abweichung von der Sollschwerpunktlage; und

d) einen Drucker zum Ausdrucken der von der Vergleichs- und Rechenstation zugeführten Resultatsignale in lesbarer Form auf einer Bewertungskarte.

Die erfindungsgemässe Vorrichtung sowie deren Anwendung sei nunmehr nachfolgend und unter Bezugnahme auf die anliegenden Zeichnungen näher erläutert.

Fig. 1 lässt den Vorgang der Achslast- und Schwerpunktermittlung eines beladenen Kraftfahrzeugs mit Sattelanhänger unter Anwendung der erfindungsgemässen Vorrichtung erkennen.

Fig. 2 zeigt schematisch die Lage des Istschwerpunktes X einer Last G bei einem LKW, einem Anhänger und einer LKW-Anhänger-Kombination, wobei die Istschwerpunktlage X sich an einer festgelegten Bezugsebene B orientiert; und

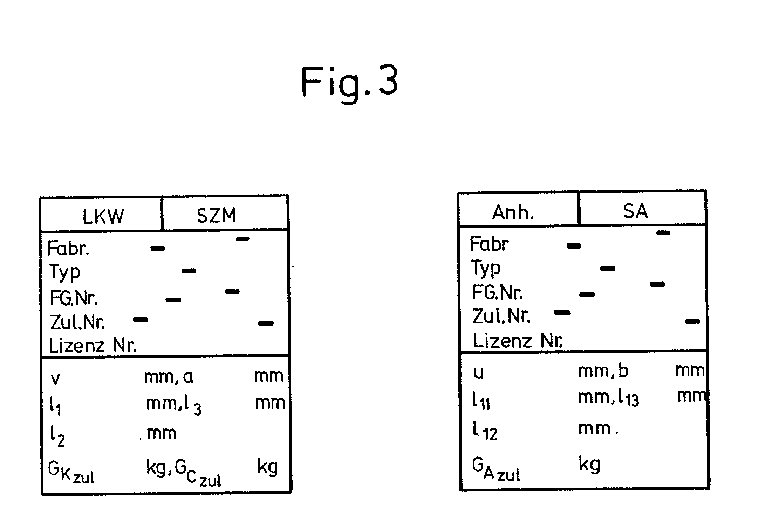

Fig. 3 zeigt die Ansicht typischer Kennkarten für einen LKW und einen Anhänger bzw. Sattelanhänger.

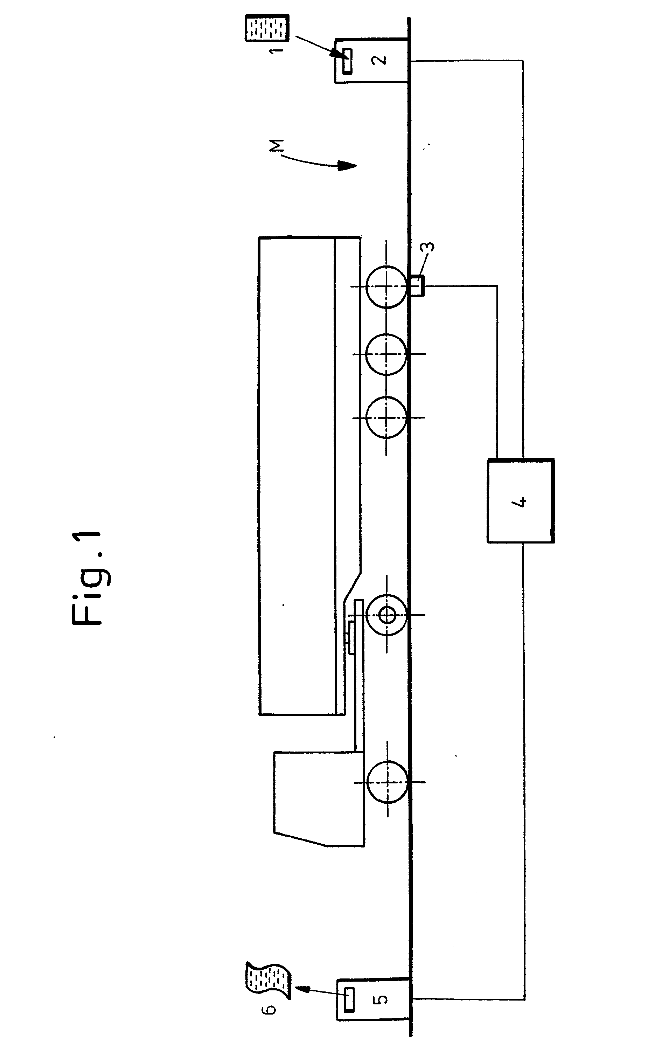

Die Fig. 1 zeigt eine Messstrecke M, welche mit der erfindungsgemässen Vorrichtung ausgestattet ist. Zur Ermittlung der Achslasten und des Istschwerpunktes X wird das beladene Transportfahrzeug – in Fig. 1 von rechts kommend – an die Messstrecke herangefahren. Der Fahrer steckt die Fahrzeugkennkarte 1 mit den darauf vermerkten Angaben der Achshöchstlasten und der Sollschwerpunktlage, evtl. auch des Gewichts des unbeladenen Fahrzeugs, in das Kartenlesegerät 2 ein und überfährt dann langsam die Messstrecke mit der eingebauten Messschwelle 3. Hierbei wird die Istbelastung G jeder einzelnen Fahrzeugachse gemessen. Die Messwerte werden an die Vergleichs- und Rechenstation 4 weitergegeben, dort mit den vom Leser 2 kommenden Achshöchstlastwerten verglichen und daraus die Istschwerpunktlage X des beladenen Fahrzeugs und deren Abweichung von der Sollschwerpunktlage berechnet. Am Ende der Messstrecke entnimmt der Fahrer dem Drucker 5, welchem die Resultatsignale der Vergleichs- und Rechenstation 4 zugeführt wurden, einen Ausdruck 6, der ihn über die Istbelastung G jeder Achse und die Istschwerpunktlage X des beladenen Fahrzeugs bzw. deren Abweichung von der Sollschwerpunktlage (evtl. zusätzlich über das Gewicht der Nutzlast und das Gesamtgewicht des Fahrzeugs) informiert. Diese Information versetzt dann den Fahrer in die Lage, die Ladung auf dem Fahrzeug richtig zu plazieren.

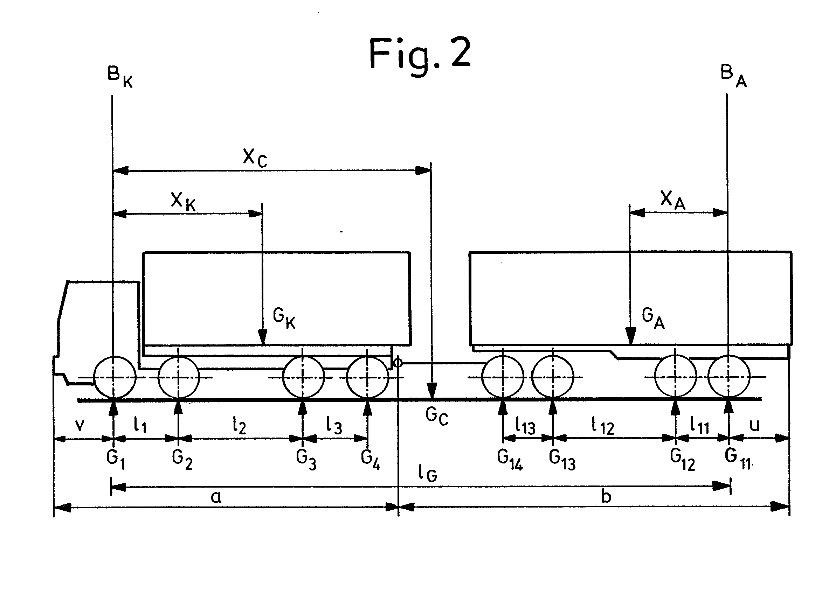

Zur Defination der Istschwerpunktlage X dient eine bestimmte festgelegte Bezugsebene B (Fig. 2). Bei einem LKW wählt man als solche Bezugsebene vorzugsweise die senkrechte Ebene $B_K$, in welcher die vorderste Achse des LKW liegt. Die Istschwerpunktlage $X_K$ beim LKW errechnet die Station 4 dann wie folgt:

$$\text{LKW: } X_K = \frac{1}{G_K} [(G_2 + G_3 + G_4)l_1 + (G_3 + G_4)l_2 + G_4 \cdot l_3]$$

wobei

$G_K$ die Gesamtlast des beladenen LKW,

$G_1, G_2, G_3, G_4$ die jeweiligen Istbelastungen der einzelnen Achsen und

$l_1, l_2, l_3$ die jeweiligen Achsabstände sind und $G_K = G_1 + G_2 + G_3 + G_4$ ist.

Nach einem Vergleich von $X_K$ mit der Sollschwerpunktlage des LKW liefert dann die Station 4 ein Differenzsignal an den Drucker 5, welcher auf der Bewertungskarte 6 zum Ausdruck kommt. So könnte z.B. der Ausdruck: «−1,2» bedeuten, dass der Abstand $B_K–X_K$ 1,2 m zu gering ist und die Nutzlast um diese Strecke von der Bezugsebene $B_K$ abgerückt werden muss. Demgemäss würde der Ausdruck: «+0,7» bedeuten, dass der Abstand $B_K–X_K$ 0,7 m zu gross ist und die Nutzlast um diese Strecke an die Bezugsebene $B_K$ herangerückt werden muss. Um die Lagekorrektur der Nutzlast auf der Plattform des Transportfahrzeugs rasch und genau durchführen zu können, kann eine Orientierungsskala vorgesehen sein, auf welcher die Abstände von der Bezugsebene vermerkt sind.

Bei einem Anhänger wählt man als feststehende Bezugsebene B vorzugsweise die senkrechte Ebene $B_A$ (Fig. 2), in welcher die hinterste Achse des Anhängers liegt. Die Istschwerpunktlage $X_A$ beim Anhänger errechnet dann die Station 4 gemäss:

$$\text{Anh.: } X_A = \frac{1}{G_A}[(G_{12}+G_{13}+G_{14})l_{11}$$
$$+ (G_{13}+G_{14})l_{12} + G_{14} \cdot l_{13}]$$

wobei
$G_A$ die Gesamtlast des beladenen Anhängers,
$G_{11}$, $G_{12}$, $G_{13}$, $G_{14}$ die jeweiligen Istbelastungen der einzelnen Achsen und
$l_{11}$, $l_{12}$, $l_{13}$ die jeweiligen Achsabstände sind und
*$G_A = G_{11} + G_{12} + G_{13} + G_{14}$ (*bei Sattelanhänger Summe der Achslasten) ist.

Wie vorstehend in Bezug auf den LKW beschrieben, liefert auch hier der Drucker 5 der erfindungsgemässen Vorrichtung eine Bewertungskarte 6, deren ausgedruckte Daten es ermöglichen, die Nutzlast korrekt auf dem Anhänger zu plazieren.

Die Istschwerpunktlage $X_C$ einer LKW-Anhänger-Kombination, wie sie in Fig. 2 dargestellt ist, errechnet die Station 4 gemäss:

$$\text{Comb: } X_C = \frac{1}{G_C}[G_K X_K + G_A(l_G - X_A)]$$

wobei
$G_C$ die Gesamtlast der Kombination und
$l_G$ der Abstand zwischen vorderster Achse des LKW und hinterster Achse des Anhängers ist.

## Patentansprüche

1. Vorrichtung zur Ermittlung der Achslasten und Schwerpunktlage von Fahrzeugen, gekennzeichnet durch:
   a) ein Kartenlesegerät (2) zum Lesen einer Kennkarte (1), auf welcher Achshöchstlasten und Sollschwerpunktlage des Fahrzeugs vermerkt sind;
   b) eine vom beladenen Fahrzeug zu überfahrende Messeinrichtung (3) zum Ermitteln der Istbelastung der einzelnen Fahrzeugachsen;
   c) eine Vergleichs- und Rechenstation (4) zum Vergleich der vom Lesegerät (2) zugeführten Informationssignale mit den von der Messeinrichtung (3) zugeführten Istbelastungssignalen sowie zur Berechnung der Istschwerpunktlage X des beladenen Fahrzeugs und deren Abweichung von der Sollschwerpunktlage; und
   d) einen Drucker (5) zum Ausdrucken der von der Station (4) zugeführten Resultatsignale in lesbarer Form auf einer Bewertungskarte (6).

2. Vorrichtung nach Anspruch 1, dadurch gekennzeichnet, dass die Messeinrichtung (3) als Messschwelle ausgebildet ist.

3. Vorrichtung nach einem der vorhergehenden Ansprüche, dadurch gekennzeichnet, dass die Station (4) zur Berechnung der Istschwerpunktlage $X_K$ eines LKW in Bezug auf diejenige senkrecht stehende Ebene $B_K$ ausgebildet ist, welche mit der vordersten Achse des LKW zusammenfällt.

4. Vorrichtung nach einem der vorhergehenden Ansprüche, dadurch gekennzeichnet, dass die Station (4) zur Berechnung der Istschwerpunktlage $X_A$ eines Anhängers in Bezug auf diejenige senkrecht stehende Ebene $B_A$ ausgebildet ist, welche mit der hintersten Achse des Anhängers zusammenfällt.

## Claims

1. A device for determining the axle loads and centre-of-gravity position of vehicles, characterised by:
   a) A card reader (2) for reading an identification card (1) containing maximum axle loads and the required centre-of-gravity position of the vehicle;
   b) A measuring system (3) over which the laden vehicle is driven to determine the actual loading on the individual vehicle axles;
   c) A comparison and computer station (4) for comparing the information signals fed from the reader (2) with the actual load signals fed from the measuring system (3) and for calculating the actual centre-of-gravity position X of the laden vehicle and its deviation from the required centre-of-gravity position; and
   d) A printer (5) for printing out the result signals fed from station (4) on to an evaluation card (6) in legible form.

2. A device according to claim 1, characterised in that the measuring system (3) is constructed as a measuring sill.

3. A device according to any one of the preceding claims, characterised in that the station (4) is adapted to calculate the actual centre-of-gravity position $X_K$ of a lorry with respect to that vertical plane $B_K$ which coincides with the foremost axle of the lorry.

4. A device according to any one of the preceding claims, characterised in that the station (4) is adapted to calculate the actual centre-of-gravity position $X_A$ of a trailer with respect to that vertical plane $B_A$ which coincides with the rearmost axle of the trailer.

## Revendications

1. Installation pour déterminer les charges par essieu et la position du centre de gravité de véhicules, caractérisée par:

a) un appareil lecteur de cartes (2) pour lire une carte de caractéristiques (1) sur laquelle sont notées les charges maximales par essieu et la position de consigne du centre de gravité du véhicule;

b) un dispositif de mesure (3) sur lequel doit passer le véhicule chargé pour la détermination de la charge réelle des différents essieux du véhicule;

c) un poste de comparaison et de calcul (4) pour comparer les signaux d'informations envoyés par l'appareil lecteur (2) avec les signaux de charge réelle envoyés par le dispositif de mesure (3) ainsi que pour calculer la position réelle X du centre de gravité du véhicule chargé et son écart par rapport à la position de consigne du centre de gravité; et

d) une imprimante (5) pour imprimer sous forme lisible sur une carte d'estimation (6) les signaux de résultats envoyés par le poste (4).

2. Installation selon la revendication 1, caractérisée en ce que le dispositif de mesure (3) est réalisé sous forme de traverse de mesure.

3. Installation selon l'une des revendications précédentes, caractérisée en ce que le poste (4) est conçu pour calculer la position réelle $X_K$ du centre de gravité d'un camion en se référant au plan vertical $B_K$ qui passe par l'essieu avant du camion.

4. Installation selon l'une des revendications précédentes, caractérisée en ce que le poste (4) est conçu pour calculer la position réelle $X_A$ du centre de gravité d'une remorque en se référant au plan vertical $B_A$ qui passe par l'essieu arrière de la remorque.

# Fig.1

0 108 896

# Fig. 2

# Fig.3

0 108 896

| LKW | SZM |
|---|---|
| Fabr. | |
| Typ | |
| FG.Nr. | |
| Zul.Nr. | |
| Lizenz Nr. | |

| v | mm, a | mm |
|---|---|---|
| $l_1$ | mm, $l_3$ | mm |
| $l_2$ | mm | |
| $G_{K_{zul}}$ | kg, $G_{C_{zul}}$ | kg |

| Anh. | SA |
|---|---|
| Fabr | |
| Typ | |
| FG.Nr. | |
| Zul.Nr. | |
| Lizenz Nr. | |

| u | mm, b | mm |
|---|---|---|
| $l_{11}$ | mm, $l_{13}$ | mm |
| $l_{12}$ | mm. | |
| $G_{A_{zul}}$ | kg | |